# EUROPEAN PATENT APPLICATION

(11) **EP 1 499 061 A1**
(43) Date of publication of application: **19.01.2005**
(21) Application number: 03102202.3
(22) Date of filing: 17.07.2003
(51) Int. Cl.: H04L 9/00, H04K 1/00, H04N 7/16

(54) **Individual video encryption system and method**

(71) Applicant: DEUTSCHE THOMSON-BRANDT GMBH, 78048 Villingen-Schwenningen (DE)
(72) Inventor: Adolph, Dirk, 30952, Ronnenberg (DE); Schewzow, Andrej, 30165, Hannover (DE); Winter, Marco, 30173, Hannover (DE)
(74) Representative: Berthier, Karine

(57) **Abstract**

A method for creating a multiplexed data stream composed of encrypted multimedia data (310), decryption information, and stream key data. The process of creating the multiplexed data stream (320) uses a multiplexing pattern that is determined in view of a stream key data and an instrument identification number preferably corresponding to the receiver of such multiplexed data stream. Stream key data that is transmitted as part of the multiplexed data stream is placed in predetermined locations, for the benefit of a decoder that extracts such stream key data from the predetermined locations. The multiplexed data stream is then processed for transport (330). A method and apparatus for demultiplexing the multiplexed data stream is also disclosed.

## Description

### FIELD OF THE INVENTION

This invention is related to a method and apparatus for encrypting multimedia data, in particular multimedia data that is encrypted before being transmitted.

### BACKGROUND OF THE INVENTION

With the development of data networks such as the Internet and the wide acceptance of broadband connections, there is a demand by consumers for video and audio objects (for example, television programs, movies, video conferencing, radio programming) that can be selected and delivered on demand through a communication network. The design of an on demand delivery system therefore must consider codecs (encoder/decoder programs) used for delivering media objects, quality of service (QoS) issues in presenting delivered multimedia data, and the transport of multimedia data over communications networks, such as audio and video data delivered in a signal.

Codecs are typically implemented through a combination of software and hardware. This system is used for encoding multimedia data representing a media object at a transmission end of a communications network and for decoding data at a receiver end of the communications network. Design considerations for codecs include such issues as bandwidth scalability over a network, computational complexity of encoding/decoding data, resilience to network losses (loss of data), and encoder/decoder latencies for transmitting data representing media streams. Commonly used codecs utilizing both Discrete Cosine Transformation (DCT) (such as a video encoder as described in Video Coding for Low Bit Rate Communications H.263, published by the International Telecommunications Union) and non-DCT techniques (such as wavelets and fractals) are examples of codecs that consider these above detailed issues. Codecs are also used to compress and decompress data because of the limited bandwidth available through a communications network.

Quality of service issues relate to the delivery of audio and video information and the overall experience for a user watching a media object. Media objects are delivered through a communications network in discrete units known as packets. These units of information, typically transmitted in sequential order, are sent via a data networkthrough nodes commonly known as servers and routers. It is therefore possible that two sequentially transmitted packets arrive at a destination device at different times because the packets may take different paths through the Internet. Consequentially, a QoS problem known as dispersion could result where a packet transmitted later in time may be processed and displayed by a destination device before an earlier transmitted packet, leading to discontinuity of displayed events. Similarly, it is possible for packets to be lost when being transmitted. A destination device typically performs an error concealment technique to hide the loss of data. Methods of ensuring QoS over a network such as over-allocating the number of transmitted packets or improving quality of a network under a load state may be used, but these methods introduce additional overhead requirements affecting communication network performance.

Communication networks control the transfer of data packets by the use of a schema known as a transport protocol. Transmission Control Protocol (TCP), described in Internet Engineering Task Force (IETF) Request For Comments (RFC) 793, is a well-known transport protocol that controls the flow of information throughout a communications network. A transport protocol attempts to stabilize a communications network by maintaining parameters such as flow control, error control, and the time-organized delivery of data packets. These types of controls are administered through the use of commands that exist in a header of a packet or separately from packets transmitted between devices through the communications network. This control information works well for a communications network that operates in a "synchronous" manner where the transmission of data packets tends to be orderly.

When transferring multimedia data over a communications network, the producer of such multimedia data wants the transmitted product to only be received and used by users who have legitimate access to such transmitted data. In many cases, multimedia data is hijacked and used by people known as pirates who do not have legitimate access to such data. In order to minimize the illegitimate use of multimedia data, a producer protects data by conditional access means to make it difficult for an unauthorized user to access and use such data.

Some common techniques of conditional access include requiring the use of a password to access data, data scrambling, data encryption, and the like. With the frequent use of conditional access systems, pirates are savvy when breaking such systems to illegally access such protected data. This is the case, if a pirate knows forehand what technique or techniques are being used to protect data.

Despite this, the prior art does not teach a multimedia data producer how to easily protect multimedia data, without revealing to a pirate which specific technique is being used to protect such data. For example document DE-U-29814544 from CM COMMUNITY MEDIA GMBH & CO, ET AL. published on 10 December 1998 discloses an operation of encrypting video streams by means of a key. The key is also encrypted and sent to a customer via satellite. The customer receives the encrypted key to decrypt such encrypted data.

### SUMMARY OF THE INVENTION

A subject of the invention is a process for protecting multimedia data, wherein it comprises the steps of:
encoding multimedia data into encrypted multimedia data; and
multiplexing said encoded multimedia data with stream key data and decryption information; characterized in that
said multiplexing step is performed in view of the stream key data and an instrument identification number.

An aspect of the invention presents an apparatus for multiplexing multimedia data into a multiplexed data stream.

An aspect to the invention presents a method for demultiplexing a multiplexed data stream in view of a stream key data included in the data stream.

An aspect to the invention presents an apparatus for demultiplexing a multiplexed data stream in view of stream key data included in the data stream.

### BRIEF DESCRIPTION OF THE DRAWINGS

The various features and advantages of the present invention and its preferred embodiments will now be described with reference to the accompanying drawings which are intended to illustrate and not to limit the scope of the present invention and in which:
FIG. 1 is a system diagram of an encoder that processes multimedia data into a protected multiplexed data stream, in accordance with an exemplary embodiment of the present invention;
FIG. 2 is an illustration of the contents of a protected multiplexed data stream, in accordance with an exemplary embodiment of the present invention;
FIG. 3 is a block diagram of a method of encoding multimedia data into a protected multiplexed data stream, in accordance with an exemplary embodiment of the present invention;
FIG. 4 is a block diagram of a method for demultiplexing a protected multiplexed data stream, in accordance with an exemplary embodiment of the present invention; and
FIG. 5 is a system diagram of a decoder that demultiplexes a multiplexed data stream into multimedia data, in accordance with an exemplary embodiment of the present invention.

### DETAILED DESCRIPTION OF THE INVENTION

As used herein, multimedia data represents any combination of text, image, video, and audio data. Streaming media comprises audio, video, multimedia, textual, and interactive data that are delivered to a user device via the Internet or other communications data network where such media may be played back before completely receiving all of the multimedia data of the media.

The exemplary embodiment pertains to the realm of a video on demand server, that delivers multimedia data, as a movie, television program, broadcast program, and the like, to user via a data network. This invention however is not just limited to this exemplary embodiment and applies to any system where multimedia data is transferred to a user, where there is a need to protect such data from the unauthorized access of a third party.

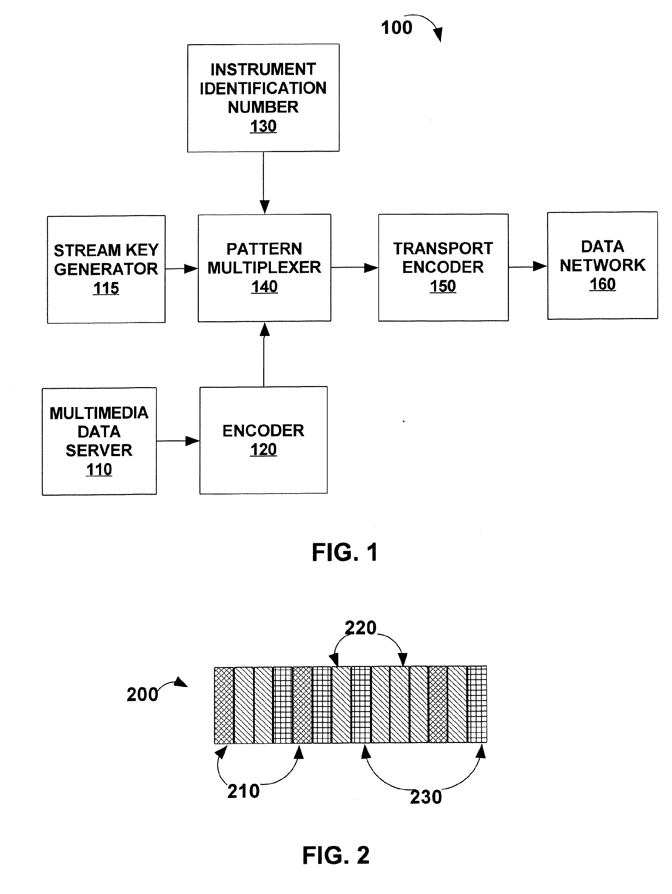

FIG. 1 is a system diagram of an encoder that processes multimedia data of a media object into a protected multiplexed data stream, in accordance with an exemplary embodiment of the present invention. In this embodiment, multimedia data is processed for transmission to a data subscriber by a service provider, where such data is protected to prevent a third party from using such data. Preferably, the data subscriber operates a decoder that has a unique identification number (UID), which is used for an indicator for identifying the data subscriber. Such a number may be assigned to the decoder based on the identification number used by a Network Interface Card (NIC) in a IEEE 802.3 compliant connection to a data network, a Media Access Control (MAC) address used in a decoding operation, or a UID that is assigned by a service provider to a data subscriber, and the like. The service provider optionally uses the UID to identify and to ascertain the access privileges of a data subscriber corresponding to such a UID.

Multimedia data server 110, as part of encoding system 100, stores and transmits multimedia data preferably to a data subscriber. Multimedia data represents audio and/or video data of a media object content such as movies, television programming, radio programming, and the like. Multimedia data server 110 may be a hard drive, removable hard disc, compact disc, a digital versatile disc, or a multiple thereof, and any other devices used to store and deliver multimedia data for an encoding operation. In an alternative embodiment of the invention, multimedia data server 110 is replaced with a data feed of real time generated multimedia data that is eventually encoded for transmission.

Encoder 120, coupled to multimedia data server 110, encodes multimedia data into format suitable for processing. For example, multimedia data received by encoder 120 is formatted into an MPEG-2 compliant format. The use of encoder 120 in this type of encoding operation is known in the art, as using encoder 120 for encoding multimedia data into a different multimedia format such as MPEG-2, MPEG-4, Joint Video Team Compression, and the like.

Encoder 120 is also used to protect multimedia data into format that makes it more difficult for third parties to access such protected data. In an exemplary embodiment, encoder 120 makes use of coding tables to code MPEG-2 formatted data into an encrypted format. Hence, a third party is limited from being able to directly access the encoded multimedia format, without knowing how such data was encrypted. Alternatively, encoder 120 may use an encryption process such as Data Encryption Standard (DES), International Data Encryption Algorithm (IDEA), Secure and Fast Encryption Routine (SAFER), or any other types of encryption method as known in the art for encrypting multimedia data. The product of the encryption operation produces data referred to as encrypted multimedia data.

Next, pattern multiplexer 140 receives encrypted multimedia data from encoder 120. Pattern multiplexer 140 performs a second step of data protection by multiplexing the encrypted multimedia data received from encoder 120 with other types of data, such a multiplexing operation being referred to as a multiplexing pattern (MUXP).

Accordingly, the MUXP operation begins with a service provider randomly choosing a value or term known as a stream key, as performed by stream key generator 115. In addition, pattern multiplexer 140 obtains a UID corresponding to a user or user's device from instrument identification number 130. The stream key and the UID are used by pattern multiplexer 140 for determining how to multiplex the data from encoder 120 with the stream key and decryption information used for decrypting the data from encoder 120.

The multiplexing of a stream key, decryption information, and encrypted multimedia data by pattern multiplexer 140 is performed by using the stream key and UID as seed values in a MUXP in view of a mathematical formula, or any other technique used for allocating the positions of at least three different data types in a data stream. For example, a MUXP used by pattern multiplexer 140 is a statistical multiplexing operation using the stream key and the UID as seed values, although other types of formulas or processes may be used for determining the MUXP. It is important that the MUXP pattern change, if either the UID value or stream key value change.

The product of the MUXP controlled multiplexing operation is illustrated in FIG. 2, representing the contents of a protected multiplexed data stream. In a preferred embodiment, protected multiplexed data stream 200 (hereafter data stream 200) is transmitted in the form of data packets, although data stream 200 may be any data format. The composition of data stream 200 comprises at least three different data types: stream key 210, encrypted multimedia data 220, and decryption information 230. Stream key 210 represents stream key data used for multiplexing and/or demultiplexing data stream 200. Preferably, stream key 210 always occupies the same packet positions in data stream 200, such positions may be repeated in accordance with a predetermined sequence. Encrypted multimedia data 220 represents multiplexed data received from encoder 120.

Decryption information 230 is data used for decrypting encrypted multimedia data 220, as part of the data stream 200. Decryption information 230 is preferably used for performing the inverse operation of the encryption process used to produce encrypted multimedia data 220. The contents of the decryption information may be cipher information, keys, or other data used for decrypting protected data.

After the multiplexing operation, data stream 200 is formatted by transport encoder 150 into a format suitable for transmission, such as data packets to be used over a TCP/IP compliant network. Transport encoder 150 transmits the formatted data via data network160 for use in a decoder for a decoding operation.

In an optional embodiment of the invention, the MUXP used to distribute data for creating data stream 200 is selected in view of the application for the playback or storage of decoded multimedia data. For example, when multimedia data is intended to be playback during a streaming based application; the MUXP pattern would tend to put most of the decryption information at the beginning of data stream 200, with multimedia data being multiplexed in data stream 200 at a later point. Hence, the operation of a decoder with the stream buffering of multimedia data is more efficient when such an arrangement is used when streaming multimedia data. In contrast for a storage operation, the MUXP would spread decryption data evenly throughout data stream 200, because data is not being directly played back in a real time operation.

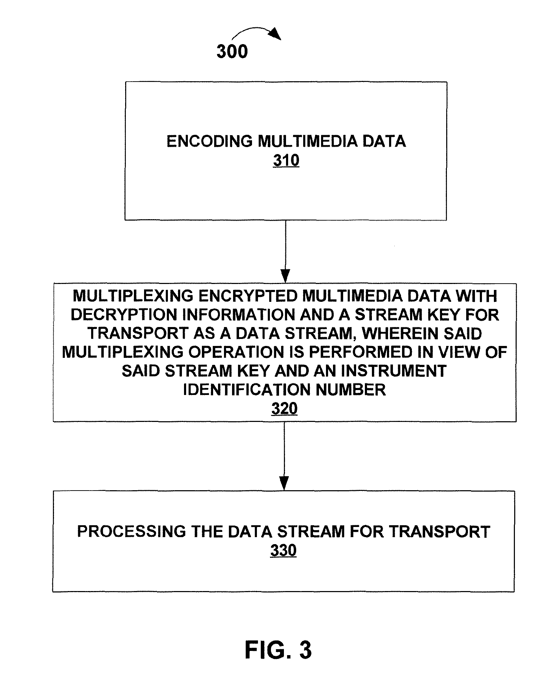

FIG. 3 is a block diagram for a method of encoding multimedia data into a protected multiplexed data stream, in accordance with an exemplary embodiment of the present invention. In step 310, multimedia data representing an audio and/or video media object is encoded and preferably encrypted into encrypted multimedia data by encoder 120 (referring to FIG. 1), in accordance with the principles of the present invention. The encoding and encryption processes may be of any type, as described above.

In step 320, the encrypted multimedia data is multiplexed into a conditional access protected multiplexed data stream with decryption information and stream key data. As explained above, pattern multiplexer 140 multiplexes of three data types into a protected multiplex data stream 200 (referring to FIG. 2), in accordance with a MUXP dependent on a stream key (from stream key generator 115) and an UID from instrument identification number 130. The location of the respective data types in the multiplexed data stream will change if either the stream key data or UID change.

In step 330, data stream 200 is formatted by transport encoder 150 into a format suitable for transport via data network160. Preferably, data stream 200 is transmitted to a decoder to which the UID corresponds.

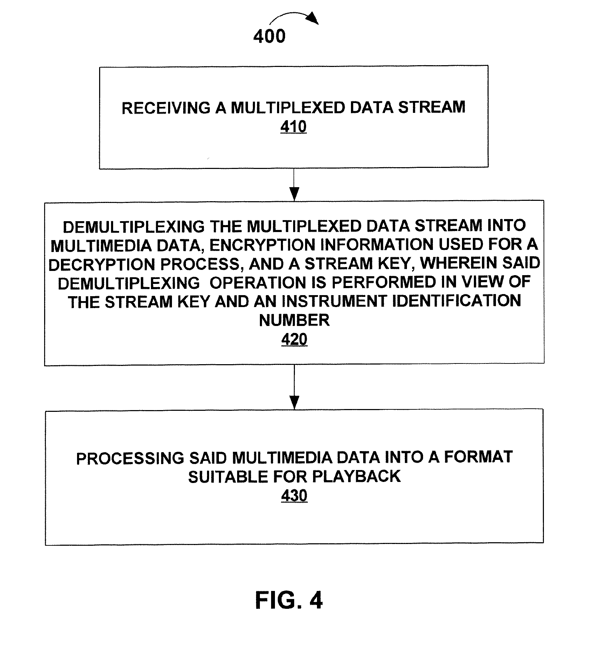

FIG. 4 is a block diagram of a method for demultiplexing a conditional access protected data stream, in accordance with an exemplary embodiment of the present invention. In the preferred embodiment, data stream 200 is demultiplexed into the data types of: stream key 210, encrypted multimedia data 220, and decryption information 230. These data types are then used to process encrypted multimedia data 220 into unencrypted multimedia data that is in a format suitable for playback or storage.

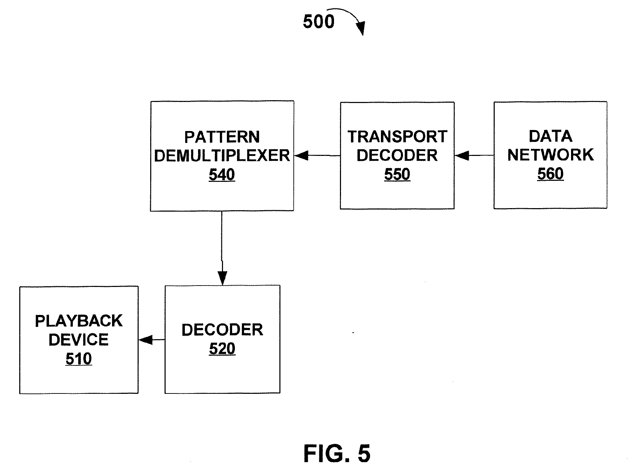

The steps of FIG. 4 are explained in view of decoding system 500 shown in FIG. 5 as a system diagram of a decoder that demultiplexes a multiplexed data stream into multimedia data, in accordance with an exemplary embodiment of the present invention.

In step 410, demultiplexing method 400 begins with the receipt of a multiplexed data stream as from data network 560. Preferably, a device capable of receiving data from a data network is used for this step such as transport decoder 550, although any device able to receive data may be used. Transport decoder 550 formats the received data stream for processing by pattern demultiplexer 540.

The received multiplexed data stream is demultiplexed in step 420 by a demultiplexer 540 (that performs an inverse operation of pattern multiplexer 140). The demultiplexing process makes use of stream key information that is transmitted as part of the composition of the multiplexed data stream. Typically because the stream key information is placed in the multiplexed data stream at predetermined places, pattern demultiplexer 540 knows where to extract such stream key information from a received data stream. Additionally, pattern demultiplexer 540 uses the UID corresponding to itself or a coupled decoder for the demultiplexing operation.

The demultiplexing operation is the inverse of the operation used to create the multiplexed data stream. Specifically, pattern demultiplexer 540 uses an inverse MUXP operation that uses the stream key and UID to reconstitute a multiplexed data stream into decryption information and encrypted multimedia data.

In step 430, the encrypted multimedia data is processed into a format suitable for playback or storage. This step is performed with the use of a decoding device (that performs the inverse operations of encoder 120 of encoding and encrypting), such as decoder 520. Decoder 520 uses the decryption information demultiplexed from the multiplexed data stream to decrypt encrypted multimedia information into an encoded multimedia data. Such data is then decoded into a data format suitable for playback or storage on multimedia device 510 such as a television set, computer, CD player, and the like, such data ideally representing multimedia data similar to data from multimedia data server 110 (from FIG. 1).

The present invention may be embodied in the form of computer-implemented processes and apparatus for practicing those processes. The present invention may also be embodied in the form of computer program code embodied in tangible media, such as floppy diskettes, read only memories (ROMs), CD-ROMs, hard drives, high density disk, or any other computer-readable storage medium, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose processor, the computer program code segments configure the processor to create specific logic circuits.

## Claims

1. A method for multiplexing data types into a multiplexed data stream comprising the steps of:
encoding (310) multimedia data into encrypted multimedia data; and
multiplexing (320) said encoded multimedia data with stream key data and decryption information; **characterized in that**
said multiplexing step is performed in view of the stream key data and an instrument identification number.

2. A method according to Claim 1, **characterized in that** said data stream has said stream key data inserted at predetermined places.

3. A method according to Claim 1, **characterized in that** said encoding step comprises:
encoding multimedia data into a multimedia data format such as MPEG-2, and
encrypting said encoded multimedia data.

4. A method according to Claim 1, **characterized in that** said data stream is processed for transport via a data network.

5. A method according to Claim 1, **characterized in that** said instrument identification number corresponds to the receiver of said multiplexed data stream.

6. A method according to Claim 1, **characterized in that** said multiplexing step is performed in further view of an application for which said encrypted multimedia data will be used.

7. An apparatus for performing the multiplexing operations of any Claim 1 to 6, said apparatus comprising:
an encoder (120) for encoding said multimedia data into said encrypted multimedia data; and
a pattern multiplexer (140) for multiplexing said encoded multimedia data with said stream key data and said decryption information; **characterized in that**
said multiplexing step is performed in view of said stream key data and an instrument identification number.

8. A method for demultiplexing said multiplexed data stream of Claim 1 into said encrypted multimedia data, said decryption information, and said stream key data, **characterized in that** said demultiplexing step uses said stream key data and said instrument identification number.

9. A method according to Claim 8, **characterized in that** said stream key data is located based on said predetermined insertion of said stream key data.

10. A method according to claim 8, **characterized in that** said encrypted multimedia data is decrypted using said decryption information into a format suitable for playback.

11. An apparatus for performing the demultiplexing operations of any Claim 8 to 10 said apparatus comprises:
a pattern demultiplexer (540) that uses said stream key data to demultiplex said multiplexed data stream; and
a decoder (520) for decoding said demultiplexed data stream into a format suitable for playback or storage.
